**Europäisches Patentamt**

**European Patent Office**

**Office européen des brevets**

(19)

(11) Veröffentlichungsnummer : **0 092 598
B1**

# (12) EUROPÄISCHE PATENTSCHRIFT

(45) Veröffentlichungstag der Patentschrift :
09.10.85

(21) Anmeldenummer : **82103605.0**

(22) Anmeldetag : **28.04.82**

(51) Int. Cl.⁴ : **B 29 D 30/00**

(54) **Greifvorrichtung.**

(43) Veröffentlichungstag der Anmeldung :
**02.11.83 Patentblatt 83/44**

(45) Bekanntmachung des Hinweises auf die Patenterteilung : **09.10.85 Patentblatt 85/41**

(84) Benannte Vertragsstaaten :
**DE FR GB IT**

(56) Entgegenhaltungen :
**EP-A- 0 003 418
DE-B- 1 579 287
DE-B- 2 000 973
US-A- 3 380 115
US-A- 3 393 807**

(73) Patentinhaber : **Fried. Krupp Gesellschaft mit beschränkter Haftung
Altendorfer Strasse 103
D-4300 Essen 1 (DE)**

(72) Erfinder : **Krebs, Gerd
Goldammerweg 1
D-2100 Hamburg 90 (DE)**

**Beschreibung**

Die Erfindung bezieht sich auf eine Greifvorrichtung für Kraftfahrzeugreifenrohlinge, insbesondere als Beschickvorrichtung für Luftreifenpressen, zum Aufnehmen, Befördern und Absetzen von Reifenrohlingen in liegender Stellung durch mindestens drei entlang eines Kreises gleichmäßig verteilte, von oben unter den oberen Wulst des Reifenrohlings fassende Greiferschaufeln, die am äußeren Ende von etwa radial verschieblichen Haltearmen angeordnet sind, deren inneres Ende an einer um eine senkrechte Achse auf einem Tragkörper drehbaren, von diesem umgebenen Steuerscheibe angelenkt ist und für deren Bewegung auf dem Tragkörper Führungen vorgesehen sind.

Derartige Greifvorrichtungen sind beispielsweise aus der europäischen Offenlegungsschrift 0 003 418 bekannt. Hier sind als Führungen für die Haltearme auf Gleitbahnen laufende Schuhe vorgesehen, die kompliziert aufgebaut sind und einen erheblichen konstruktiven und herstellungstechnischen Aufwand erfordern. Darüber hinaus ist für die dauernde Funktionsfähigkeit der Einrichtung eine umfangreiche Wartung notwendig, die insbesondere bei erhöhten Temperaturen, wie sie bei der Vulkanisation von Reifenrohlingen auftreten, ins Gewicht fällt. Die Führungsteile verkanten sich leicht und sind beträchtlichem Verschleiß ausgesetzt. Es ist Aufgabe der vorliegenden Erfindung, diese Nachteile zu vermeiden und eine einfache und betriebssichere Konstruktion der Greifvorrichtung mit dementsprechend wartungsfreien Führungsmitteln für ihre Betätigung anzugeben.

Danach wird für eine Greifvorrichtung der eingangs genannten Art vorgeschlagen, daß als Führungen für die Haltearme auf dem Tragkörper angeordnete vorzugsweise drehbar gelagerte Zapfen dienen, an denen die Haltearme während ihrer Bewegung entlanggleiten. Damit ist eine jederzeit einwandfreie Funktion der Greifvorrichtung bei sehr einfachem Aufbau gewährleistet. Es wird eine deutliche Gewichtsverminderung und Kostensenkung bei der Herstellung erreicht. Eine aufwendige Oberflächenbearbeitung entfällt.

Die Zapfen können auch so ausgeführt sein, daß sie als feststehende Halterung für sie umgebende Rollen dienen, die mit einer verschleißfesten, temperaturbeständigen Beschichtung versehen sind und die Führung der Haltearme übernehmen. Dadurch ist hier eine Gleitreibung bei der Bewegung der Haltearme vermieden.

Die vorgeschlagene Zapfenführung kann in der Weise gestaltet sein, daß für jeden Haltearm ein Zapfen vorgesehen ist, der in einen mit ihm die Führung bewirkenden sich in Längsrichtung des Haltearms erstreckenden Schlitz im Haltearm eingreift. Dabei kann die Bewegung der Haltearme weitestgehend radial erfolgen. Eine entsprechende Wirkung wird erreicht, wenn statt dessen für jeden Haltearm zwei Zapfen in einem der Breite des Haltearms entsprechenden Abstand voneinander vorgesehen sind, zwischen denen der Haltearm mit seinen beiden Längsseiten entlanggleitet.

In weiterer Ausgestaltung der Erfindung wird vorgeschlagen, daß für jeden Haltearm ein Zapfen vorgesehen ist, an dem er mit einer Längsseite entlanggleitet, daß der Zapfen so auf dem Tragkörper angeordnet ist, daß die Längsachse des Haltearms während des gesamten Verschiebeweges von der Radialen zur Achse der Steuerscheibe abweicht, und daß die Haltearme untereinander durch jeweils gleiche Federspannung, beispielsweise durch jeweils zwischen äußeren Enden benachbarter Haltearme gespannte Federn verbunden sind. Hierbei ergibt sich eine besonders gute Zugänglichkeit zu den Führungsteilen. Es ist lediglich bei der Bemessung des Drehantriebs für die Steuerscheibe zum Strecken der Haltearme zu beachten, daß die federnde Verbindung zwischen den Haltearmen eine während der Streckbewegung zu überwindende Kraft erzeugt.

Weiter empfiehlt es sich, die Greiferschaufeln an den beiden Enden der Haltearme um senkrechte Achsen schwenkbar zu lagern. Dadurch läßt sich die Lage der Greiferschaufeln unabhängig von der Strecklage der Haltearme immer genau zur Lage der Anlagefläche an dem zu greifenden Reifenrohling ausrichten.

Besonders günstig ist eine Ausführung, bei der an den Enden der Haltearme je zwei über einen um eine senkrechte Achse schwenkbaren Schwenkhebel zusammengefaßte Greiferschaufeln gelagert sind. Soweit zwischen den Haltearmen Federn vorgesehen sind, können diese an den Seiten der Greiferschaufeln bzw. der Schwenkhebel angelenkt sein, und bewirken dann eine selbsttätige Ausrichtung der Greiferschaufeln auf den Reifenrohling.

In der Zeichnung ist ein Ausführungsbeispiel einer erfindungsgemäßen Greifvorrichtung wiedergegeben, und zwar in

Figur 1 in Draufsicht bei eingezogenen Haltearmen und in

Figur 2 in Draufsicht bei gestreckten Haltearmen.

Auf einem aus einem Träger 1 und einer Grundplatte 2 bestehenden Tragkörper ist eine Steuerscheibe 3 um eine senkrechte Achse drehbar gelagert. Die Drehbewegung wird durch einen an der Grundplatte 2 angelenkten Pneumatikantrieb 4 erzeugt, dessen Kolbenstange 5 über ein Gelenk 6 mit der Steuerscheibe 3 verbunden ist. Zwischen der Grundplatte 2 und der Steuerscheibe 3 liegen Haltearme 7, die mit ihrem inneren Ende über Bolzen 8 an der Steuerscheibe 3 angelenkt sind. Die Haltearme 7 gleiten bei einer Längsbewegung mit einer Seitenfläche an auf der Grundplatte 2 befestigten Zapfen 9 entlang. Am äußeren Ende der Haltearme 7 sind Schwenkhebel 10 über eine Achse 11 drehbar gelagert. Jeder Schwenkhebel 10 trägt zwei Greiferschaufeln 12, die in den Bereich unterhalb der Grundplatte 2 ausladen. Zwischen den Schwenkhebeln 10 sind Federn 13 gespannt.

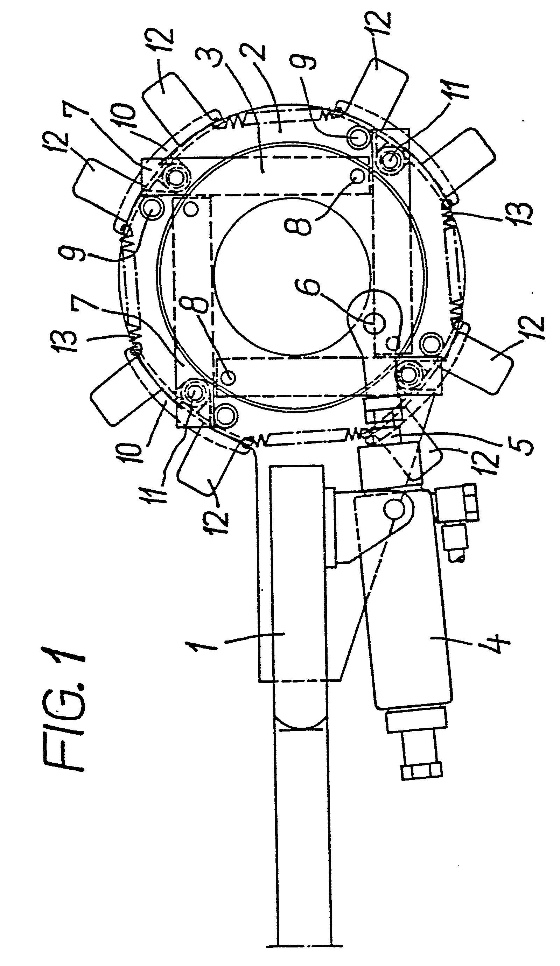

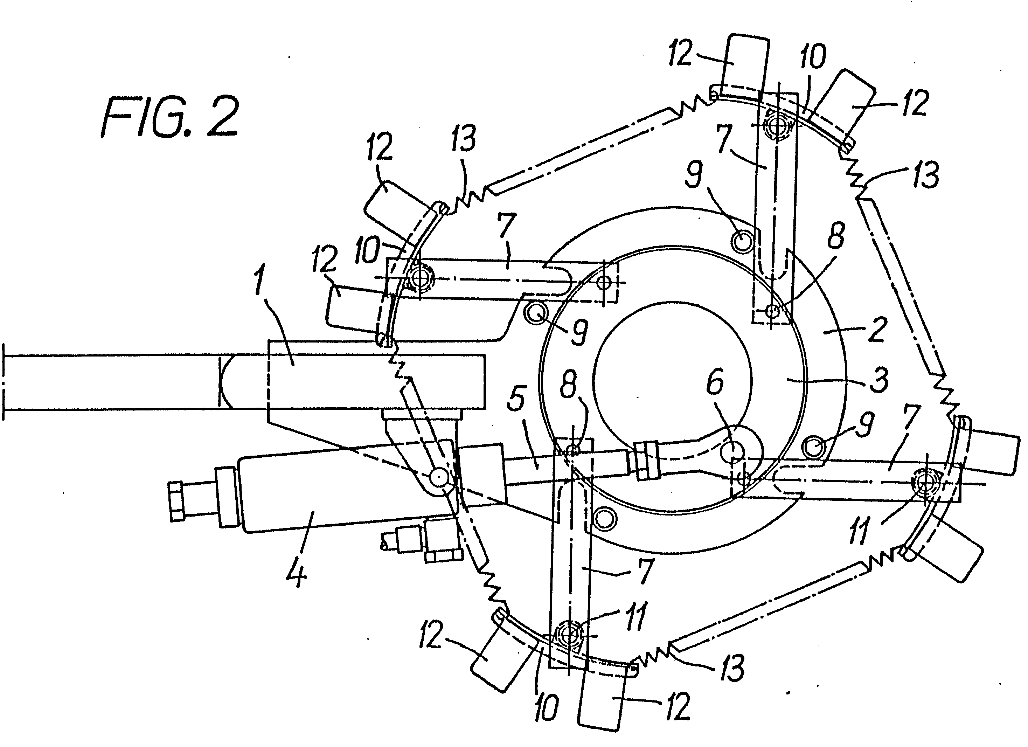

In der in Fig. 1 dargestellten Lage der Greifvorrichtung sind die Haltearme eingezogen. Die von den Greiferschaufeln 12 überdeckte Fläche hat die kleinstmögliche Erstreckung. Die Greifvorrichtung ist bereit für die Leerfahrt. Zum Aufnehmen eines Reifenrohlings wird sie über diesen verfahren und abgesenkt, bis die Greiferschaufeln 12 in das Innere des Reifenrohlings eintauchen. Dann wird der Pneumatikantrieb 4 betätigt, der die Steuerscheibe 3 dreht, so daß die Haltearme gegen den Zug der Federn 13 ausfahren. Dabei bleiben die Greiferschaufeln durch den tangential wirkenden Federzug zentriert. Gleichzeitig halten die Federn 13 die Haltearme 7 an den Zapfen 9 in Anlage, so daß die Haltearme symmetrisch ausfahren. Wenn die Greiferschaufeln die Innenfläche des Reifenrohlings bzw. dessen oberen Wulst erreicht und untergriffen haben und ein vorbestimmter Anlagedruck erreicht ist, wird der Pneumatikantrieb 4 abgeschaltet. Die Greifvorrichtung befindet sich in der Transportlage, wie sie in Fig. 2 dargestellt ist. Nunmehr kann mit ihr der Reifenrohling zur Reifenheizpresse befördert und dort abgesetzt werden. Nach dem Absetzen des Reifenrohlings werden die Haltearme 7 durch Zurückdrehen der Steuerscheibe 3 mittels des Pneumatikantriebs wieder eingezogen und die Greifvorrichtung aus der Reifenheizpresse ausgefahren.

**Patentansprüche**

1. Greifvorrichtung für Kraftfahrzeugreifenrohlinge, insbesondere als Beschickvorrichtung für Luftreifenpressen, zum Aufnehmen, Befördern und Absetzen von Reifenrohlingen in liegender Stellung durch mindestens drei entlang eines Kreises gleichmäßig verteilte, von oben unter den oberen Wulst des Reifenrohlings fassende Greiferschaufeln (12), die am äußeren Ende von etwa radial verschieblichen Haltearmen (7) angeordnet sind, deren inneres Ende an einer um eine senkrechte Achse auf einem Tragkörper (1, 2) drehbaren, von diesem umgebenen Steuerscheibe (3), angelenkt ist und für deren Bewegung auf dem Tragkörper Führungen vorgesehen sind, dadurch gekennzeichnet, daß als Führungen auf dem Tragkörper (1, 2) angeordnete, vorzugsweise drehbar gelagerte, Zapfen (9) dienen, an denen die Haltearme (7) entlanggleiten.

2. Greifvorrichtung nach Anspruch 1, dadurch gekennzeichnet, daß die Zapfen (9) als feststehende Halterung für auf ihnen gelagerte Rollen dienen, die mit einer verschleißfesten, temperaturbeständigen Beschichtung versehen sind.

3. Greifvorrichtung nach Anspruch 1 oder 2, dadurch gekennzeichnet, daß für jeden Haltearm (7) ein Zapfen (9) vorgesehen ist, der in einen mit ihm die Führung bewirkenden, sich in Längsrichtung des Haltearms (7) erstreckenden Schlitz im Haltearm (7) eingreift.

4. Greifvorrichtung nach Anspruch 1 oder 2, dadurch gekennzeichnet, daß für jeden Haltearm (7) zwei Zapfen (9) in einem der Breite des Haltearms (7) entsprechenden Abstand voneinander vorgesehen sind, zwischen denen der Haltearm (7) mit seinen beiden Längsseiten entlanggleitet.

5. Greifvorrichtung nach Anspruch 1 oder 2, dadurch gekennzeichnet, daß für jeden Haltearm (7) ein Zapfen (9) vorgesehen ist, an dem er mit einer Längsseite entlanggleitet, daß der Zapfen (9) so auf dem Tragkörper (1, 2) angeordnet ist, daß die Längsachse des Haltearms (7) während des gesamten Verschiebeweges von der Radialen zur Achse der Steuerscheibe (3) abweicht, und daß die Haltearme (7) untereinander durch jeweils zwischen den äußeren Enden benachbarten Haltearme (7) gespannte Federn (13) verbunden sind.

6. Greifvorrichtung nach Anspruch 5, dadurch gekennzeichnet, daß die federnde Verbindung zwischen den Haltearmen (7) unmittelbar an den einander zugewandten Seiten der Greiferschaufeln (12) angelenkt ist.

7. Greifvorrichtung nach einem der vorhergehenden Ansprüche, dadurch gekennzeichnet, daß die Greiferschaufeln (12) an den Enden der Haltearme (7) um senkrechte Achsen (11) schwenkbar gelagert sind.

8. Greifvorrichtung nach einem der vorhergehenden Ansprüche, dadurch gekennzeichnet, daß an den Enden der Haltearme (7) je zwei über einen um eine senkrechte Achse (11) schwenkbaren Schwenkhebel (10) zusammengefaßte Greiferschaufeln (12) gelagert sind.

**Claims**

1. Gripper device for motor vehicle tyre blanks, especially as charging device for pneumatic tyre presses, for taking up, conveying and setting down tyre blanks in horizontal position by at least three gripper blades (12) uniformly distributed along a circle and engaging from above under the upper bead of the tyre blank, which blades are arranged on the outer ends of approximately radially displaceable retaining arms (7) of which the inner ends are articulated to a control disc (3) rotatable about a vertical axis on a carrier body (1, 2) and surrounded by the latter and for the movement of which guides are provided on the carrier body, characterised in that as guides there serve journals (9) arranged, preferably rotatably mounted, on the carrier body (1, 2), along on which journals the retaining arms (7) slide.

2. Gripper device according to Claim 1, characterised in that the journals (9) serve as stationary retention for rollers mounted on them, which are provided with a wear-resistant, temperature-stable coating.

3. Gripper device according to Claim 1 or 2, characterised in that for each retaining arm (7) a journal (9) is provided which engages in a slot in the retaining arm (7) which extends in the longitudinal direction of the retaining arm (7) and with the journal effects the guidance.

4. Gripper device according to Claim 1 or 2, characterised in that for each retaining arm (7) two journals (9) are provided at a distance from one another corresponding to the width of the retaining arm (7), between which journals the retaining arm (7) slides along with its two longitudinal sides.

5. Gripper device according to Claim 1 or 2, characterised in that for each retaining arm (7) a journal (9) is provided on which it slides along with one longitudinal side, in that the journal (9) is so arranged on the carrier body (1, 2) that the longitudinal axis of the retaining arm (7) departs during the entire displacement distance from the radius to the axis of the control disc (3), and in that the retaining arms (7) are connected with one another in each case by springs (13) stressed between the outer ends of adjoining retaining arms (7).

6. Gripper device according to Claim 5, characterised in that the resilient connection between the retaining arms (7) is articulated directly to the sides facing one another of the gripper blades (12).

7. Gripper device according to one of the preceding Claims, characterised in that the gripper blades (12) are mounted pivotably about perpendicular axes (11) on the ends of the retaining arms (7).

8. Gripper device according to one of the preceding Claims, characterised in that two gripper blades (12), linked through a pivot lever (10) pivotable about a perpendicular axis (11), are mounted on each of the ends of the retaining arms (7).

**Revendications**

1. Dispositif de manutention d'ébauches de pneus de véhicules automobiles, notamment pour le chargement de pneus, qui permet de prendre, de transporter et de déposer des ébauches de pneus en position couchée au moyen d'au moins trois palettes de manutention (12), régulièrement réparties autour d'une circonférence, qui prennent d'en haut par dessous le bourrelet supérieur de l'ébauche de pneu et qui sont montées à l'extrémité extérieure de bras de maintien (7) qui peuvent se déplacer à peu près dans le sens radial et dont l'extrémité intérieure s'articule sur un disque de commande (3), monté de manière à pouvoir tourner autour d'un axe vertical sur un corps de support (1, 2) et entouré par ce corps, et dont les déplacements sur le corps de support sont dirigés par des dispositifs de guidage, caractérisé en ce que les dispositifs de guidage montés sur le corps de support (1, 2) sont des tenons (9) qui sont montés de préférence de manière à pouvoir tourner et le long desquels les bras de maintien (7) se déplacent en glissant.

2. Dispositif de manutention selon la revendication 1, caractérisé en ce que les tenons (9) servent de dispositif de maintien fixe de galets qui sont montés sur paliers sur eux et comportent un revêtement résistant à l'usure et aux variations de température.

3. Dispositif de manutention selon l'une des revendications 1 ou 2, caractérisé en ce qu'à chaque bras de maintien (7) correspond un tenon (9) qui s'engage, dans le bras de maintien (7), dans une rainure qui est orientée dans le sens longitudinal du bras de maintien (7) et qui assure le guidage en coopération avec le tenon.

4. Dispositif de manutention selon l'une des revendications 1 ou 2, caractérisé en ce qu'à chaque bras de maintien (7) correspondent deux tenons (9) qui sont séparés par une distance égale à la largeur du bras de maintien (7) et entre lesquels le bras de maintien (7) glisse le long de ses deux bords longitudinaux.

5. Dispositif de manutention selon l'une des revendications 1 ou 2, caractérisé en ce qu'à chaque bras de maintien (7) correspond un tenon (9) contre lequel il glisse le long de son côté le plus long, en ce que ce tenon (9) est monté sur le corps de support (1, 2) de telle manière que, pendant tout le trajet de déplacement, l'axe longitudinal du bras de maintien (7) s'écarte de la direction radiale vers l'axe du disque de commande (3) et en ce que les bras de maintien (7) sont reliés les uns aux autres par des ressorts (13) tendus entre les extrémités extérieures de deux bras de maintien (7) voisins.

6. Dispositif de manutention selon la revendication 5, caractérisé en ce que la liaison élastique entre les bras de maintien (7) s'articule directement sur les côtés qui se font face des palettes de manutention (12).

7. Dispositif de manutention selon les revendications précédentes, caractérisé en ce que les palettes de manutention (12) sont montées, aux extrémités des bras de maintien (7) de manière à pouvoir pivoter autour d'axes verticaux (11).

8. Dispositif de manutention selon les revendications précédentes, caractérisé en ce que les extrémités des bras de maintien (7) portent chacune deux palettes de manutention (12) reliées par un levier pivotant (10) qui peut tourner autour d'un axe vertical (11).

FIG. 1

FIG. 2